# EUROPEAN PATENT APPLICATION

(11) **EP 1 235 409 A2**
(43) Date of publication of application: **28.08.2002**
(21) Application number: 02004180.2
(22) Date of filing: 26.02.2002
(51) Int. Cl.: H04L 29/06, H04L 12/64, H04M 7/00

(54) **Multi-homing proxy apparatus, and associated method, for digital communication network**

(30) Priority: 26.02.2001 US 271938 P; 19.02.2002 US 78196
(71) Applicant: ALCATEL, 75008 Paris (FR)
(72) Inventor: Gupta, Sudeep, Frisco, TX 75035 (US)
(74) Representative: Dreiss, Fuhlendorf, Steimle & Becker

(57) **Abstract**

A multi-homing proxy apparatus (24), and an associated method (68), for a VoP (Voice overPacket), or other packet-based, telephonic network (10. The multi-homing proxy (24) determines (28), responsive to input indicia of communication conditions in the telephonic network and appropriate load balance of session control functionality amongst softswitches (18-1, 18-2, 18-3) of the telephonic network. Responsive to the determinations (28), a control signal generator (32) generates control signals to control allocation and subsequent reallocation of the session control functionality.

## Description

The present invention relates generally to a manner by which to provide session control over communications in a digital communication network, such as a VoP (Voice overPacket) network. More particularly, the present invention relates to apparatus, and an associated method, by which to determine, and selectably effectuate, allocation of session control between one or more softswitches, or other control devices, used in the digital communication network. A multi-homing proxy provides for determinations in what manner to allocate the session control. Load-balancing, determined pursuant to a selected load-balancing scheme, permits the processing loads allocated to the softswitches to be balanced, or otherwise distributed, in a desired manner and thereafter dynamically reallocated as communication conditions change.

### BACKGROUND OF THE INVENTION

Telephonic communication systems are exemplary of communication systems that have been widely deployed and regularly utilized, by large numbers of users. Use of a telephonic communication system through which to communicate is a necessary, and endemic, part of modern society. Telephonic communication networks have been installed throughout significant portions of the populated areas of the world. And, users are able to communicate telephonically therethrough by way of telephonic, or other communication, stations connected to the telephonic networks.

Conventional telephonic networks generally provide for the formation of circuit-switched connections between telephonic endpoints of a telephonic communication session effectuated by way of the telephonic network. When a circuit-switched connection is formed, a dedicated channel is provided to interconnect the telephonic endpoints that are to communicate pursuant to the telephonic communication session. That is to say, a channel is dedicated for the exclusive use of the telephonic endpoints for the duration of the communication session.

Telephonic communications, however, are not continuous, but rather are intermittent in nature. Because of the intermittent nature of many of such telephonic communication sessions, the communication capacity, i.e., the dedicated channel, does not fully utilize the allocated communication capacity, i.e., the dedicated channel, allocated to effectuate the telephonic communications between the telephonic endpoints. Circuit-switched connections, formed in a conventional telephonic network to effectuate many telephonic communication sessions, therefore inefficiently utilizes the communication capacity of a telephonic network.

Communication schemes that provide for shared-channel communications, in contrast, generally make more efficient use of the communication capacity of a telephonic, or other communication, network. Packet-based communication networks, for instance, utilize shared channels upon which to communicate packet-formatted data. When a shared channel is utilized, more than one communication session is effectuable upon a single shared channel. Because packet-formatted data can be communicated during discrete intervals, the same channel can be utilized to communicate packet-formatted data, during separate time periods, to effectuate communication services pursuant to separate communication sessions. More efficient utilization of the communication capacity of a communication network is thereby possible, in contrast to communication schemes in which only circuit-switched connections are permitted.

Standardized, packet formatting protocols are commonly used to form, and send, data packets. One protocol scheme, the Internet protocol (IP), or IP protocol, is regularly utilized in many different types of communication systems to effectuate many different types of communication services. Other protocol schemes have analogously been developed and are widely utilized.

Next-generation telephonic communication systems under development include telephonic networks that are predicated upon packet-based communication schemes. In such next-generation, telephonic systems, voice, non-voice, and multimedia communication services shall all be effectuable through the use of packet-based communications, using IP-formatted, or other packet-formatted, data.

Such a new-generation, telephonic network generally includes a packet data network, or fabric. To effectuate a communication service, packet-switched channels are formed during operation of the telephonic network to permit the effecutation of a communication service. Devices referred to as media gateways are coupled to the packet data network. Gateways are operable, amongst other things, to form gateways to the packet data network from local networks. Protocol translation, for instance, is performed at the gateways, if needed, to permit communication of data out of a local network and into the packet data network. Voice and coding operations, and other data manipulation operations, are also performed by the media gateways.

Operational control of the packet-based, telephonic communication system is effectuated by a softswitch entity that functionally forms a part of, or is connected to, the packet-based telephonic network. The softswitch performs various communication network operations, including operations that control connection services of the gateways as well as to control call routing based upon signaling information and database information related to the telephonic endpoints of telephonic communication sessions.

Packet-based, telephonic networks include various redundancies, such as the use of redundant softswitches to ensure better that continued system operation shall occur in the event of a partial, or complete, failure of one or another of the softswitches. Dual homing proxies are utilized to provide for the at least alternate operation of the softswitches to facilitate transfer of control operations to a back-up softswitch upon failure of a primary softswitch.

A proxy device is used to resolve requests, inquiries, and other signals made to one, or another, of the softswitches so that the messages can be routed to the appropriate softswitch that is being used to provide session control over media gateways and at least portions of the packet -based telephonic network.

While use of a proxy is advantageous for this purpose, the inclusion of a homing proxy device in a packet-based telephonic network provides additional control possibilities that have not yet been fully explored.

Any manner by which further to utilize a homing proxy to increase the adaptability of a telephonic network or provide other advantages or features thereto would be advantageous.

It is in light of this background information related to telephonic communication systems that the significant improvements of the present invention have evolved.

### SUMMARY OF THE INVENTION

The present invention, accordingly, advantageously provides apparatus, and an associated method, by which to provide session control over communications in a digital communication network, such as a VoP (Voice overPacket) network.

Through operation of an embodiment of the present invention, a manner is provided by which to determine, and selectably to effectuate, allocation of session control between one or more softswitches, or other control devices, used in the digital communication network.

In one aspect of the present invention, a multi-homing proxy provides for determinations of in what manner to allocate the session control. Load-balancing, determined pursuant to a selected load-balancing scheme, permits the processing loads allocated to the softswitches to be balanced, or otherwise distributed, in a desired manner.

In another aspect of the present invention, allocation of session control to one, two, or more, softswitches embodied at a VoP telephonic network is made responsive to expectations of subsequent system loading. Allocation of session control functionality by separate softswitches over communications of separate media gateways is dependent upon the anticipated load requirements at the separate media gateways. Load-balancing between session control allocations to softswitches to control operation of separate ones of the media gateways is made to balance the load amongst the softswitches.

Level balancing of the anticipated load amongst softswitches provides an equal distribution of processing load on the respective softswitches. A particular softswitch is allocated session control over a selected number of media gateways based upon the anticipated load of the media gateways. A fixed association of softswitches to media gateways, and the potential for unbalanced load allocation, is not needed. Thereby, if a partial, or complete, softswitch failure occurs, redistribution of the allocation of session control to another softswitch, or group of softswitches, is made thereby to ensure continued session control over the media gateways previously associated with the failed softswitch.

In another aspect of the present invention, determinations of session control allocations to separate softswitches is made responsive to measurements of existing loads. As loads of different ones of the media gateways change, the distribution of allocation accordingly changes. And, alternately, the allocation of session control amongst the softswitches is made responsive to historical measurements of prior loading characteristics of the separate media gateways.

In another aspect of the present invention, load balancing calculations are performed, and, responsive to the calculations, session control functions are allocated to separate softswitches. The load balancing calculations are performed to balance, at a selected ratio, the session control functions. The selected ratio may, for instance, be a one-to-one ratio, substantially to equalize the session control functions amongst all of the available softswitches.

In one implementation, the multi-homing proxy forms a stand-alone device, both functionally and physically separate from the softswitches of the VoP network.

In another implementation, the functionality of the multi-homing proxy is embodied at one or more softswitches, e.g., distributed amongst several, or all, of the softswitches of the network. And, in an implementation in which the communication network further includes a signaling hub, such as a signal transfer point (STP) of an SS7 network, part, or all, of the functionality of the multi-homing proxy is embodied therein.

Thereby, by distributing the session control function allocations amongst the softswitches, the processing capacities of the softswitches can be appropriately sized to be operable to provide control session functionality in a distributed manner. If session control functions required for operation of a set of media gateways associated with a softswitch become of aberrantly high, the capacity of other softswitches is, effectively, borrowed so that the increased session control function can be provided. As communication conditions subsequently change, further reallocation of the session control functionality is effectuated.

In these and other aspects, therefore, apparatus, and an associated method, is provided for a packet-based communication system. The system has a first set of media gateways and at least a second set of media gateways. The packet-based communication system has a first control device at least selectably coupled to the media gateway of the first set and the second set. And, the packet-based communication system has at least a second control device also at least selectably coupled to the media gateways of the first set and the second set. The first control device and the second control device are selectably operable to provide session control of communications effectuated by way of the individual ones of the media gateways. Selection of which of the first and second control devices to be operable during a selected period to provide the session control of communications to selected ones of the media gateways of the first and at least the second sets is facilitated. A determiner is coupled to receive indications of communication indicia related to at least communications to be effectuated by way of individual ones of the media gateways. The determiner determines, responsive thereto, which of the first and at least second control devices are to provide the session control of the communications to the selected ones of the media gateways.

A more complete appreciation of the present invention and the scope thereof can be obtained from the accompanying drawings that are briefly summarized below, the following detailed description of the presently-preferred embodiments of the present invention, and the appended claims.

### BRIEF DESCRIPTION OF THE DRAWINGS

Figure 1 illustrates a functional block diagram of a telephonic communication system that includes a VoP (Voice overPacket) telephonic network in which an embodiment of the present invention is operable.
Figure 2 illustrates a functional block diagram of a portion of the telephonic network shown in Figure 1 during operation of an embodiment of the present invention.
Figure 3 illustrates a functional block diagram, similar to that shown in Figure 2, here also illustrating operation of an embodiment of the present invention.
Figure 4 illustrates a method flow diagram listing the method steps of the method of operation of an embodiment of the present invention.

### DETAILED DESCRIPTION

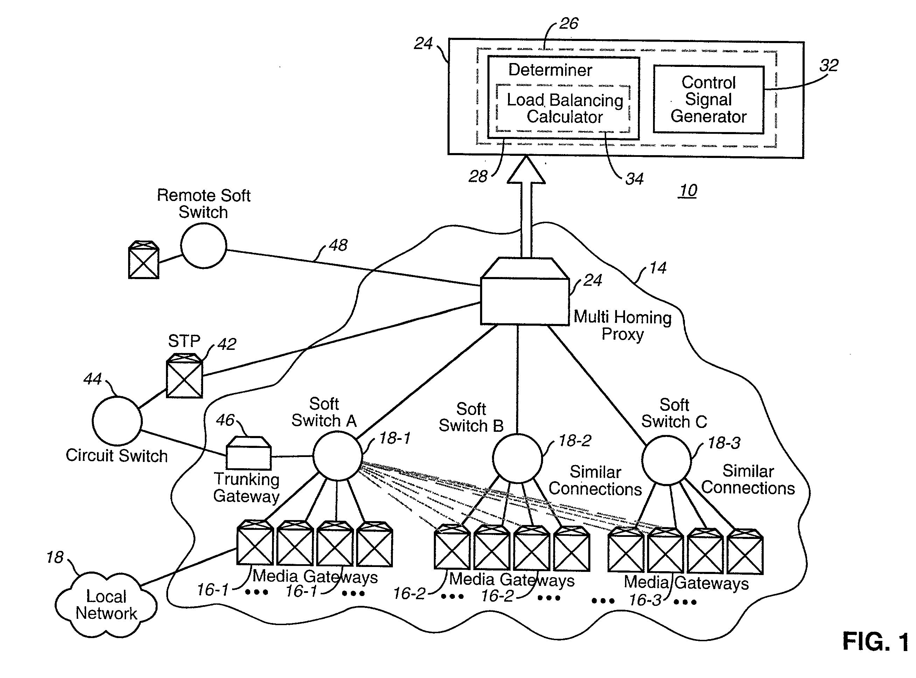

Referring first to Figure 1, the network of a telephonic communication system, shown generally at 10, provides for communications between communication stations, here telephonic communication stations, that are connected to the telephonic network to be operable therein.

In the exemplary implementation, the telephonic communication system includes a next-generation, packet-data network (PDN) 14. Sometimes, the network 14 is referred to as the communication fabric of the communication system. The network 14 here forms a VoP (Voice overPacket) network, capable of communicating VoP-formatted (Voice over Packet-formatted) data. Communication of voice data, non-voice data, and combinations of different types of data is provided by way of the packet data network. Any of various technologies and protocols are represented by a VoP network. A VoIP (Voice over Internet Protocol) network, a VoATM (Voice over Asynchronous Transfer Mode) network, and a VToA (Voice Transport over ATM) network are each exemplary of a VoP network.

The telephonic network 14 includes a plurality of media gateways 16. The media gateways form gateways to the packet data network from local networks, of which the local network 18 is exemplary. The media gateways perform functions such as protocol translation and voice encoding operations. The specific operations performed by different ones of the media gateways are dependent upon the local networks coupled to the individual ones of the gateways and for which the gateways form gateways to the network 14. In general, the gateways 16 form the access mechanisms by which the telephonic stations of the local networks are able to access the packet data network 14, thereby to permit inter-network communications to be effectuated.

The telephonic network 14 further includes softswitches 18. The softswitches are coupled to the media gateway 16 and operate to provide session control functions to control operations of, and to permit operation of, the media gateways. As operability of a softswitch is essential for operation of the packet data network to permit communication sessions to be formed and communication services to be effectuated, the telephonic network includes at least one redundant softswitch. Here, the telephonic network is shown to include three softswitches 18, softswitches 18-1, 18-2, and 18-3.

It should be noted that, as the elements of the communication system are functionally represented, the implementation shown in the Figure is merely exemplary. For instance, while the softswitches 18 are shown as separate entities in the Figure , the functionalities thereof, in other implementations, are implemented elsewhere. For example, call control and switching intelligence functions provided by the softswitch can instead by physically implemented at the media gateways. Operation of an embodiment of the present invention is, of course, readily adapted to implementation in such physical configuration of the functionalities of the softswitches.

The media gateways 16 are at least selectably coupled to the separate softswitches, thereby selectably to permit different ones of the softswitches to provide the session control functions to permit operation of the media gateways. And, here, in the exemplary implementation that illustrates three softswitches, each of the media gateways is selectably coupled to each of the three softswitches. Upon failure of one of the softswitches, the session control function provided by such softswitch is transferred to another of the softswitches to permit continued operation of the affected media gateway to permit communication sessions of telephonic stations controlled therethrough to be effectuated.

In the figure, for purposes of illustration, the first softswitch 18 is shown to be coupled to a first set of media gateways, each designated at 16-1. The second softswitch 18-2 is analogously shown together with a second set of media gateways, each designated at 16-2. And, the third softswitch 18-3 is shown together with a third set of media gateways, each designated at 16-3.

While the separate softswitches, during normal operation of the telephonic network are normally associated with a set of media gateways, through operation of an embodiment of the present invention, the sets of media gateways associated with specific softswitches is not set but, rather, is dynamically determined, changeable as communication conditions warrant.

The telephonic network here further includes a multi-homing proxy 24 that is at least selectably coupled to the softswitches 18. The multi-homing proxy is a functional entity. Here, in the exemplary implementation shown in the figure, the proxy forms a separate physical element, functionally and physically separated from the softswitches. In other implementations, the functions provided by the multi-homing proxy are embodied in existing devices of the network, such as at a softswitch 18, or distributed amongst several softswitches. And, in other implementations, the proxy is used to perform control operations to effectuate control over the functionalities of softswitches, wherever implemented.

The multi-homing proxy operates to control allocation of the session control functionality of the separate softswitches 18. That is to say, responsive to determinations of an optimal distribution of the session control functionality of separate ones of the softswitches, such allocations are caused to be implemented. As communication conditions change, reallocations of the optimal distributions are made and implemented. Thereby, dynamic distribution of the session control functionality is provided throughout operation of the multi-homing proxy.

The multi-homing proxy 24 includes functional elements pursuant to an embodiment of the present invention. In the exemplary implementation, the elements are implemented as algorithms executable by processing circuitry, here indicated by the element 26. And, as shown, the proxy device includes a determiner 28 and a control signal generator 32.

The determiner includes, or is formed of, a load balancing calculator 34. The determiner, and the load balancing calculator formed thereof, is coupled to receive input indicia on the line 38. The determiner operates, responsive to values of the input indicia, to determine the proper allocation of session control functionality amongst the softswitches 18. And, when the determiner, as illustrated, includes the load balancing calculator, the calculator operates to balance the session control functionality load amongst the softswitches in an optimal manner. The optimal manner is, for instance, an equal distribution of the processing requirements associated with the session control functionality.

Indications of the determinations made by the determiner are provided to the control signal generator 32. The control signal generator 32 is operable responsive to the indications of the determinations made by the determiner to generate control signals for application to the softswitches 18, and elsewhere, to initiate allocation of the session control functionality. As the input indicia provided to the determiner change with changing communication conditions in the telephonic network, determinations made by the determiner correspondingly change. And, control signals generated by the control signal generator also correspondingly change to cause appropriate reallocation of the distribution of the session control functionality.

The indicia provided to the determiner, and responsive to which determinations are made of the allocation of session control functionality, is formed of any of various types of indicia, or combinations thereof. The indicia is formed of, for instance, values representative of anticipated communication loads at individual ones of the media gateways 16. Or, the indicia is formed of values representative of ongoing communication loads at the individual ones of the media gateways.

And, the input indicia also, in the exemplary implementation, includes indications of operability of the individual softswitches 18. In the event that a softswitch is indicated to be partially, or wholly, inoperable, the determiner excludes, or reduces, the session control functionality allocated to such softswitch or softswitches. Additional, or alternate, input indicia can also be utilized in the determinations made by the determiner. And, load balancing calculations performed by the load balancing calculator permit load balancing, in any desired ratio, such as a one-to-one ratio. As communication loading conditions, or other conditions, at the media gateways change, reallocation of the loading is performed.

Thereby, the proxy operates to reroute messages generated during operation of the telephonic network to an appropriate softswitch. In the event of failure of one of the softswitches, rerouting of messages is performed to route the messages to a substitute softswitch to permit continued operation of the telephonic network. And, through operation of an embodiment of the present invention, the proxy also reroutes messages to a pool of softswitches 18 in response to telephonic network conditions indicated by the input indicia. While the softswitches 18 might normally be operable in conjunction with separates sets of media gateways, in the event that one of the softswitches is indicated to be processing more communication traffic than the others, redistribution of the system load is effectuated.

To effectuate such operation, the softswitches 18 generate the input indicia that is provided to the determiner of the multi-homing proxy. The load associated with the session control functionality provided by individual ones of the softswitches as well as the status of such softswitches are provided to the determiner. During periods of high loading or in the event of failure of a softswitch, reallocation and redistribution of the session control functionality is effectuated.

In the exemplary communication system shown in Figure 1, a service transfer point (STP) 42 is further utilized, here shown to be connected to a circuit switch 44 of another telephonic network. The circuit switch 44 is also coupled, by way of a trunking gateway 46, to one of the softswitches 18. Input indicia provided to the determiner 28 of the multi-homing proxy, in one implementation, is also provided by way of an SS7 signaling line 48 connecting the STP with the proxy device.

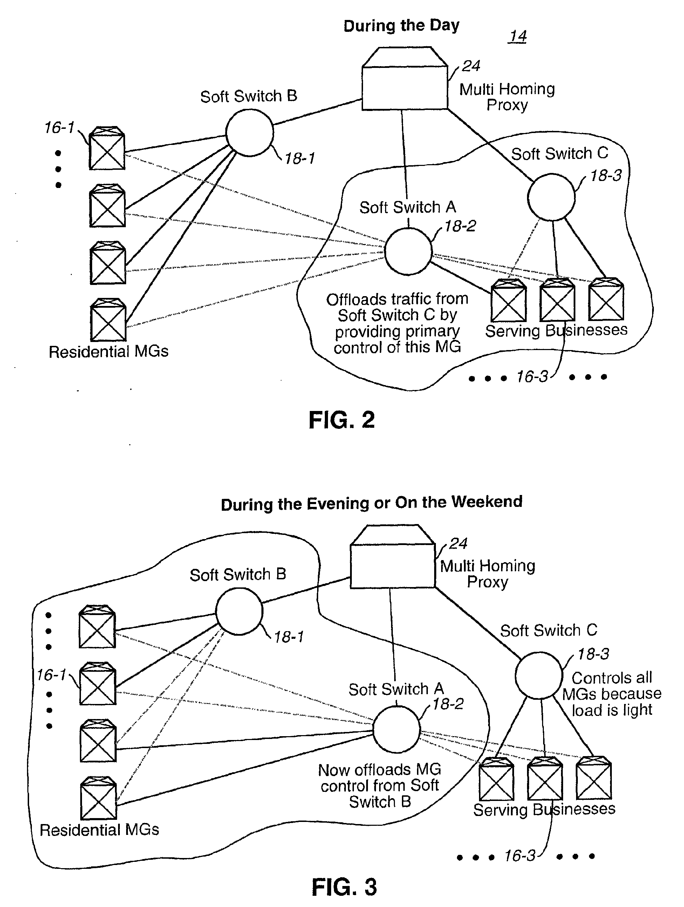

Figure 2 again illustrates portions of the telephonic network 14 of the communication system 10 shown in Figure 1. Again, the multi-homing proxy 24 is shown to be coupled to a plurality of softswitches 18. And, connection of softswitches 18-1 and 18-3 are shown to be coupled to a plurality of media gateways formed of the sets 16-1 and 16-3, respectively to, at least initially, provide session control functionality over communications provided by such media gateways. The media gateways 16-1 are here representative of gateways that control residential network areas, and the gateways 16-3 are here representative of gateways that control business network areas.

In the initial configuration, the softswitch 18-2 operates to offload session control functions otherwise required to be performed by the softswitch 18-3. Here, call control for one of the media gateways, for instance, is taken over by the softswitch 18-2. During peak business hours, the session control functionality is provided by all of the softswitches.. But, during non-peak hours, e.g., evening or weekend hours, the softswitch 18-2 offloads the softswitch 18-1 by controlling some of the media gateways associated with the softswitch 18-1. And, the softswitch 18-3 reverts to controlling all of the business media gateways when the load is lighter during the non-peak hours. The multi-homing proxy controls such allocation and reallocation of session control functionality.

The illustration of Figure 3 represents the non-peak reallocation of session control functionality in which the center-most softswitch is used to provide some of the session control functionality of the residential media gateways.

Because of the distribution of the processing load associated with the session control functionality, the softswitches can be more appropriately sized, i.e., reduced in processing capacity as the processing capacity can be borrowed from others of the softswitches.

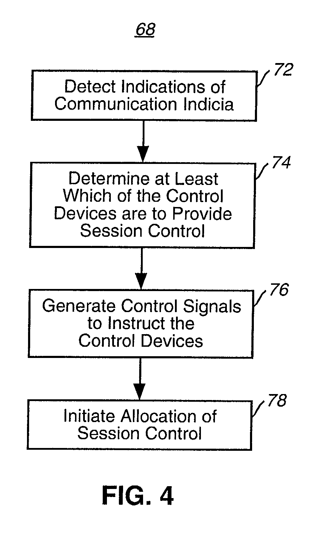

Figure 4 illustrates a method, shown generally at 68, for providing session control of communications to selected ones of media gateways of a packet-based communication system.

First, and as indicated by the block 72, indications of communication indicia related to at least communications to be effectuated by way of individual ones of the media gateways are detected. Then, and as indicated by the block 74, responsive to the indications of the communication indicia, determinations are made at least as to which of the first and at least second control devices are to provide session control of communications to selected ones of the media gateways.

Thereafter, and as indicated by the block 76, control signals are generated to instruct the first and at least second control devices whether to provide the session control for individual ones of the media gateways. And, thereafter, and as indicated by the block 78, effectuation of allocation of the session control is initiated.

Thereby, through operation of an embodiment of the present invention, improved operation of the telephonic network is permitted as use is made of a multi-homing proxy device to dynamically allocate session control functionality provided to individual ones of the softswitches.

The previous descriptions are of preferred examples for implementing the invention, and the scope of the invention should not necessarily be limited by this description. The scope of the present invention is defined by the following claims:

## Claims

1. A packet-based communication system (10) having a first set of media gateways (16-1) and at least a second set of media gateways (16-2), and the packet-based communication system (10) having a first control device (18-1) at least selectably coupled to the media gateways (16-1, 16-2) of the first set and the second set and at least a second control device (18-2) also at least selectably coupled to the media gateways (16-1, 16-2) of the first set and the second set, the first control device (18-1) and the second control device (18-2) selectably operable to provide session control of communications effectuated by way of individual ones of the media gateways, said packet-based communication system (10) **characterized by** apparatus (24) for facilitating selection at least of which of the first and second control devices (18-1, 18-2) are operable, during a selected period, to provide the session control of communication to selected ones of the media gateways (16-1, 16-2) of the first and at least second sets, said apparatus (24) comprising:
a determiner (28) coupled to receive indications of communication indicia selected to at least communications to be effectuated by way of individual ones of the media gateways (16), said determiner (28) for determining, responsive thereto, which of the first and at least second control devices (18-1, 18-2) are to provide the session control of the communications to the selected ones of the media gateways (16).

2. The apparatus (24) of claim 1 further comprising a control signal generator (32) coupled to said determiner (28) to receive indications of determinations made by said determiner (28) and coupled to the first and second control device (18-1, 18-2), said control signal generator (32) operable responsive to the indications of the determinations made by said determiner (28), for generating control signals instructing the first and second control devices (18-1, 18-2) whether to provide the session control for individual ones of the media gateways (16).

3. The apparatus (24) of claim 1 wherein said determiner (28) is further coupled to receive indicia representative of anticipated session control requirements of the individual ones of the media gateways (16) and wherein determinations made by said determiner (28) are further responsive to the indicia representative of the anticipated session control requirements.

4. The apparatus (24) of claim 1 wherein said determiner (28) is further coupled to receive indicia representative of an operability status of the first control device (18-1) and indicia representative of an operability status of the second control device (18-2) and wherein determinations made by said determiner (28) are further responsive to indicia representative of the operability status of the first and second control devices (18-1, 18-2), respectively.

5. The apparatus (24) of claim 1 wherein determinations made by said determiner (28) are made pursuant to load balancing calculations for balancing, at a selected ratio, session control functions to be provided by the first and second control devices (18-1, 18-2), respectively.

6. The apparatus (24) of claim 5 wherein the selected ratio of load balancing between the first and second control devices (18-1, 18-2) comprises a substantially one-to-one ratio.

7. The apparatus (24) of claim 1 wherein the first control device (18-1) comprises a first softswitch (18-1) and the second control device (18-2) comprises a second softswitch (18-2), said determiner (28) for allocating session control operations for performing session control of the selected ones of the media gateways (16) to the first and second control devices (18-1, 18-2) pursuant to a session control allocation scheme and responsive to the indications of the communication indicia.

8. The apparatus (24) of claim 7 wherein at least part of said determiner (28) is embodied at least at one of the first softswitch (18-1) and the second softswitch (18-2).

9. The apparatus (24) of claim 7 wherein the communication system (10) further comprises a signaling hub forming a message router and wherein at least a part of said determiner (28) is embodied at the signaling hub.

10. The apparatus (24) of claim 9 wherein the communication system (10) comprises an SS7 network as a portion thereof, wherein the signaling hub comprises a Signal Transfer Point (STP) (42), and wherein the at least the part of said determiner is embodied at the Signal Transfer Point.

11. The apparatus (24) of claim 1 wherein the communication system comprises a proxy device (24) positioned separate from, and coupled to, the first and at least second control devices (18-1, 18-2) and wherein at least a part of said determiner (28) is embodied at the proxy device.

12. The apparatus (24) of claim 11 wherein the proxy device (24) comprises a homing proxy and wherein said determiner (28) is embodied at the homing proxy.

13. The apparatus (24) of claim 1 wherein the at least the second set of media gateways (16-2) comprises the second set of media gateways (16-2) and at least a third set of media gateways, wherein the at least the second control device (18-2) comprises the second control device (18-2) and at least a third control device (18-3), and wherein said determiner (28) determines which of the first, second and at least third control devices, respectively, and in what allocation manner, are to provide the session control of the communications.

14. The apparatus (24) of claim 13 wherein the first set (16-1), the second set (16-2), and the third set (16-3) form independent sets.

15. A method of communicating in a packet-based communication system having a first set of media gateways and at least a second set of media gateways, and the packet-based communication system having a first control device at least selectably coupled to the media gateways of the first set and the second set and at least a second control device also at least selectably coupled to the media gateways of the first set and the second set, the first control device and the second control device selectably operable to provide session control of communications effectuated by way of individual ones of the media gateways, said method **characterized by** a method (68) for facilitating selection of which of the first and second control devices, are operable during a selected period, to provide the session control of communication to selected ones of the media gateways of the first and at least second sets, said method (68) comprising:
detecting (72) indications of communication indicia related to at least communications to be effectuated by way of individual ones of the media gateways; and
determining (74), responsive to the indications detecting during said operation of detecting, which of the first and at least second control devices are to provide the session control of the communications to the selected ones of the media gateways.

16. The method (68) of claim 15 further comprising the operation of:
generating (76) control signals instructing the first and at least second control devices whether to provide the session control for individual ones of the media gateways.

17. The method (68) of claim 15 wherein determinations made during said operation of determining (72) are made responsive to a load balancing calculation by which to balance, at a selected ratio, session control functions to be provided by the first and second control devices, respectively.

18. The method (68) of claim 15 wherein the indications of the communication indicia detected during said operation of detecting (72) comprise indicia representative of anticipated session control requirements of the individual ones of the media gateways.

19. The method (68) of claim 15 wherein the indications of the communication indicia detected during said operation of detecting (72) comprise indicia representative of an operability status of the first control device and indicia representative of an operability status of the at least the second control device.

20. The method (68) of claim 15 wherein the indications of the communication indicia detected during said operation of detecting (72) comprise indicia representative of existing session control requirements of the individual ones of the media gateways.
